Europäisches Patentamt

European Patent Office

Office européen des brevets

(19)

(11) Numéro de publication: **0 023 168**
**B1**

(12)     **FASCICULE DE BREVET EUROPEEN**

(45) Date de publication du fascicule du brevet: **19.09.84**

(51) Int. Cl.³: **C 25 B 1/10, C 25 B 15/02**

(21) Numéro de dépôt: **80400994.2**

(22) Date de dépôt: **01.07.80**

(54) **Installation d'électrolyse pour la production de gaz.**

(30) Priorité: **05.07.79 FR 7917929**

(43) Date de publication de la demande:
**28.01.81 Bulletin 81/04**

(45) Mention de la délivrance du brevet:
**19.09.84 Bulletin 84/38**

(84) Etats contractants désignés:
**AT BE CH DE GB IT LI NL SE**

(56) Documents cités:
**FR-A- 715 802**
**FR-A-1 151 507**
**FR-A-2 426 746**
**US-A-4 021 319**

(73) Titulaire: **CREUSOT-LOIRE**
**42.rue d'Anjou**
**F-75008 Paris (FR)**

(72) Inventeur: **Lantin, Patrice**
**Hameau de Varanges**
**F-71640 Givry (FR)**
Inventeur: **Pere, Gérard**
**6 rue d'Essertenne**
**F-71670 Le Breuil (FR)**

(74) Mandataire: **Dupuy, Louis et al**
**CREUSOT-LOIRE 15 rue Pasquier**
**F-75383 Paris Cedex 8 (FR)**

Courier Press, Leamington Spa, England.

## Description

La présente invention se rapporte à une installation d'électrolyse pour la production de gaz, telle qu'une installation destinée à la production industrielle d'hydrogène et d'oxygène par électrolyse de l'eau sous pression.

Dans les installations d'électrolyse pour la production de gaz Hydrogène et Oxygène connues actuellement, par exemple telles que décrites dans le brevet français FR—A—1.151.507, les circuits de retour d'anolyte et de catholyte en provenance des dispositifs de dégazage sont réunis dans une même tuyauterie, ce qui permet d'obtenir ainsi des densités en potasse à l'entrée de l'électrolyseur égales du côté anodique et de côté cathodique. Cette mise en commun des circuits de retour d'électrolyte dégazé permet, en assurant des densités en potasse égales à chacune des deux entrés de l'électrolyseur, d'éviter une baisse de rendement de l'électrolyseur au fur et à mesure de son fonctionnement qui serait due à l'augmentation de la densité en potasse du côté cathodique et à la diminution corrélative de celle-ci du côté anodique. On sait en effet que la réaction d'électrolyse entraîne une perte de potasse et un gain d'eau de côté de l'anode, et vice-versa du côté de la cathode. Or, la résistivité de l'électrolyte est fonction de la densité de celui-ci en potasse, et augmente si l'on s'écarte sensiblement de part et d'autre de la densité optimale. Il est donc indispensable, pour fonctionner avec un bon rendement, de garder toujours les densités de potasse aux entrées de l'électrolyseur voisines de la densité optimale correspondant au minimum de résistivité du mélange électrolytique.

Avec ces installations connues, il est indispensable, pour éviter les risques d'explosions consécutifs à d'éventuels mélanges de gaz hydrogène et oxygene, d'être équipé avec des dispositifs de dégazage très efficaces, ceux-ci devant dégazer la totalité du débit d'électrolyte en circulation. De tels dégazeurs sont encombrants et onéreux, et il serait souhaitable de pouvoir équiper l'installation d'électrolyse avec des dispositifs de dégazage moins sophistiqués.

On connaît par ailleurs, tel que décrit dans le brevet US—A—4.021.319, un électrolyseur pour la récupération d'Argent à partir de solutions photographiques, dans lequel un flot continu d'électrolyte est obtenu par le maintien d'une différence de pression hydrostatique entre les deux compartiments d'un bac d'électrolyse.

La présente invention concerne un nouveau type d'installation d'électrolyse pour la production de gaz qui, tout en fonctionnant à rendement optimal comme les installation connues, n'en présente pas les inconvénients, pouvant être équipée de dégazeurs beaucoup plus simples et beaucoup moins encombrants. Une telles installation est du type comportant un électrolyseur équipé de cellules d'électrolyse ayant chacune un compartiment cathodique et un compartiment anodique, séparés l'un de l'autre par un diaphragme perméable aux liquides et imperméable aux gaz, une entrée d'électrolyte à une des extrémité de chaque compartiment et une sortie d'électrolyte à l'autre extrémité dudit compartiment, l'installation étant munie de moyens pour faire circuler l'électrolyte en parallèle dans chacun desdits compartiments, de moyens pour diriger l'anolyte en sortie des compartiments anodiques vers un premier dispositif de dégazage, de moyens pour diriger le catholyte en sortie des compartiments cathodiques vers un second dispositif de dégazage, de moyens pour extraire l'anolyte dégazé du premier dispositif de dégazage et pour le réinjecter dans les compartiments anodiques par leurs entrées, et de moyens pour extraire le catholyte dégazé du second dispositif de dégazage et le réinjecter dans les compartiments cathodiques par leurs entrées, et elle est caractérisée en ce qu'elle est en outre munie de moyens basés sur la création de différences de débit, permettant d'effectuer dans l'électrolyseur, un transfert partiel d'électrolyte à travers chaque diaphragme, de chaque compartiment cathodique vers le compartiment anodique correspondant, le pourcentage de catholyte ainsi transféré étant égal à celui nécessaire pour conserver des densités voisines pour l'anolyte et le catholyte malgré la réaction d'électrolyse, et en ce qu'elle comporte par ailleurs un dispositif permettant de réinjecter le même pourcentage d'électrolyte, du circuit de retour d'anolyte dégazé vers le circuit de retour de catholyte dégazé.

L'invention se rapporte également à une installation d'électrolyse pour la production de gaz telle que ci-dessus définie, mais où les moyens basés sur des différences de débit sont remplacés par des moyens basés sur des différences de pression entre les deux dispositifs de dégazage.

L'invention sera mieux comprise à l'aide de la description, suivante de quelques exemples de réalisation, en référence aux dessins annexés dans lesquels:

— la figure 1 représente schématiquement un exemple de réalisation d'une installation d'électrolyse de l'eau conforme à l'invention;

— la figure 2 représente schématiquement une variante de réalisation de l'installation d'électolyse de l'eau de la figure 1;

— la figure 3 représente schématiquement un autre exemple de réalisation d'une installation d'électrolyse de l'eau selon l'invention.

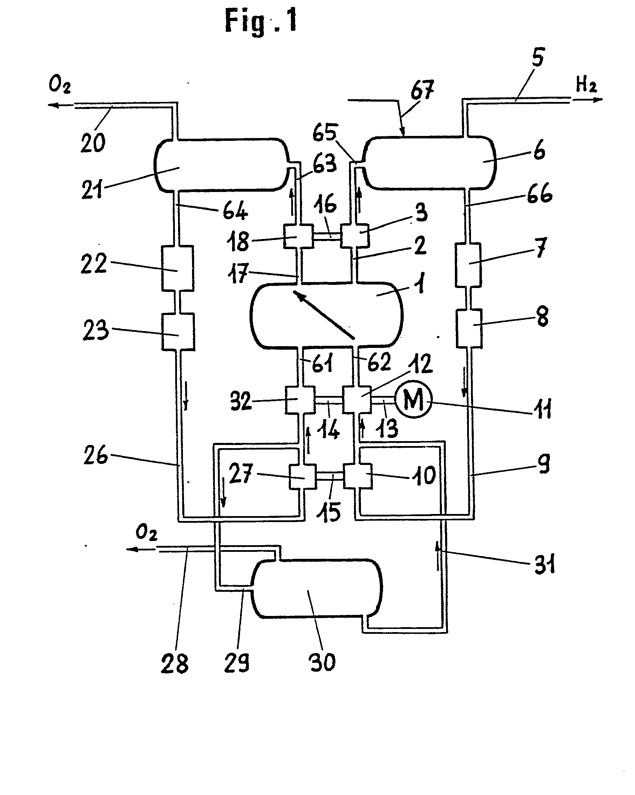

Sur la figure 1, on a désigné par la référence 1 l'électrolyseur équipant l'installation d'électrolyse de l'eau sous pression représentée et conforme à l'invention. L'électrolyseur 1 a ses cellules d'électrolyse équipées de diaphragmes de séparation des compartiments anodique et cathodique constitués en une matière imperméable aux gaz, ne laissant par exemple pas passer des bulles de gaz de diamètre supérieur à 10 microns, mais de porosité suffisante pour être perméables aux liquides; par exemple, ces diaphragmes sont en amiante matériau qui possède de telles propriétés.

De manière classique, l'électrolyseur 1 est muni d'une sortie d'analyte 17, d'une sortie de catholyte 2, ainsi que d'une entrée 61 d'électrolyte destiné aux compartiments anodiques et d'une entrée 62 d'électrolyte destiné aux compartiments cathodiques. De manière classique également, l'anolyte issu de 17 est amené, par l'intermédiaire d'un circuit 63 vers un dégazeur d'anolyte 21 dont l'oxygène est extrait par l'intermédiaire d'une conduite de sortie de gaz 20. De manière classique également, l'anolyte dégazé est extrait du dégazeur 21 par une sortie 64, et passe ensuite dans un circuit réfrigérant 22 et un filtre 23.

De même, et de façon symétrique, le catholyte sortant de l'électrolyseur 1 en 2 passe successivement dans un circuit de liaison 65, un dégazeur de catholyte 6, lui-même muni d'une conduite de sortie d'hydrogène 5, puis sort du dégazeur 6 par une sortie 66 et traverse un circuit réfrigérant 7 et un filtre 8.

Conformément à l'invention, les circuits (26, 9) de retour d'anolyte et de catholyte en sortie des filtres 23 et 8 ne sont pas, comme dans la plupart des installations connues, réunis sur une seule conduite, mais restent séparés entre les conduites (26, 9) et les entrées correspondantes (61, 62) dans l'électrolyseur 1. De manière cependant à conserver, dans chaque cellule d'électrolyse, la concentration optimale en potasse correspondant, à environ ±10% près, à la densité, généralement de l'ordre de 1,3, donnant à l'électrolyte la résistivité minimale, l'installation est en outre équipée de moyens permettant, en créant une différence de débit catholyte-anolyte dans l'électrolyseur, de faire passer en permanence, à travers chaque diaphragme, une portion bien définie, en général de l'ordre de 10 à 20%, du débit de catholyte dans les compartiments anodiques. Ces moyens, tels que schématisés sur l'exemple de réalisation de la figure 1, sont les suivants:

En amont de l'électrolyseur sont placées, de manière classique, des pompes de circulation à engrenage, respectivement une pompe 32 sur le circuit anodique et une pompe 12 sur le circuit cathodique. Ces pompes fournissent des débits dans le rapport voisin de (1/3, 2/3) nécessaire dans les cas de l'électrolyse de l'eau. Pour ceci, une manière sure et économique, connue et représentée sur le dessin, consiste à entraîner, par un moteur commun 11 et un arbre 13, les deux pompes à engrenages 12 et 32, elles-mêmes accouplées par un arbre 14, et à donner aux roues à engrenages de chaque pompe des diamètres identiques pour des roues correspondantes, mais des largeurs d'engrenages dans le rapport voisin du rapport (1/3, 2/3) voulu pour les rapports de débits.

De manière à provoquer, comme indiqué très schématiquement par la flèche sur le dessin, le transfert par aspiration d'une portion bien définie du débit de catholyte dans le circuit d'anolyte, on a placé, en sortie de l'électrolyseur 1, un régulateur à engrenages (18, 16, 3). Un tel régulateur est composé de deux dispositifs de commande de débit (18, 3) accouplés par un arbre 16, et constitués chacun par deux roues dentées s'engrenant l'une dans l'autre comme c'est le cas pour les pompes volumétriques à engrenages. Conformément à la présente invention, on a réglé la largeur des dents des dispositifs 18 et 3, relatifs respectivement au circuit anodique et au circuit cathodique, afin que leur rapport soit de 10 à 30% supérieur à celui existant pour les pompes 32 et 12. Par exemple, au lieu d'être dans le rapport (1/3, 2/3), elles sont dans le rapport (0,37, 0,62). La différence des débits provoque alors l'aspiration souhaitée d'une partie du circuit de catholyte vers le circuit d'anolyte, de sorte que l'on garantit ainsi pour ces deux circuits un écart de densité suffisamment faible pour assurer un bon rendement à l'électrolyseur. Pour fixer les idées, la densité optimale étant de 1,3, on obtiendra des densités s'écartant environ jusqu'à 10% de part et d'autre de cette valeur.

Cependant, les circuits d'anolyte et de catholyte étant séparés, il est nécessaire, du fait que l'on transfère en permanence 10 à 20% du débit du second dans le premier, de compenser ce transfert en dérivant également en permanence une proportion égale d'anolyte vers le circuit cathodique, sans quoi le circuit cathodique se viderait totalement.

Les moyens utilisés dans ce but sont, conformément à l'invention, les suivants:

— d'une part on rajoute, comme représenté en 67, l'eau (ou plus généralement le liquide de base dans le ces de l'électrolyse d'un liquide autre que l'eau) destinée à compenser celle consommée naturellement par le phénomène d'électrolyse dans le dégazeur cathodique 6 seul;

— d'autre part on dérive, par une conduite 29, une faible portion, de l'ordre de 10 à 20%, du débit anodique, et on le réinjecte par une conduite 31 dans le circuit cathodique, après l'avoir fait passer dans un dégazeur 30, de petites dimensions, destiné à effectuer en 28 la séparation poussée de l'oxygène du circuit d'anolyte dérivé, ceci afin d'éviter l'introduction de bulles de ce gaz dans le circuit cathodique.

Comme représenté sur le dessin, la dérivation (29, 30, 31) est effectuée en amont du dispositif de pompage volumétrique (32, 12) et, de manière à permettre de dériver le pourcentage nécessaire, correspondant au débit de transfert de l'invention, un régulateur de débit (27, 15, 10) sensiblement identique au régulateur (18, 16, 3) est placé sur les deux circuits d'électrolyte, en amont des dérivateurs 29 et 31.

L'installation d'électrolyse qui vient d'être décrite permet, tout en restant dans les conditions optimales pour avoir le meilleur rendement de la réaction d'électrolyse, d'avoir des circuits d'anolyte et de catholyte séparés. Il n'est alors pas nécessaire d'avoir une séparation gaz-liquide totale, jusqu'à 99%, comme pour les dispositifs connus jusqu'alors, et il suffira de dégazer jusqu'à 90% par exemple. Les dégazeurs nécessaires 21 et 6 sont alors de dimensions bien plus faibles que les dégazeurs utilisés dans les dispositifs précédents. Un dégazeur supplémentaire 30 est cependant nécessaire dans le circuit de compensation de débit (29, 30, 31), mais celui-ci est de faibles dimensions, n'ayant à effectuer la séparation que sur une faible proportion du débit total d'anolyte.

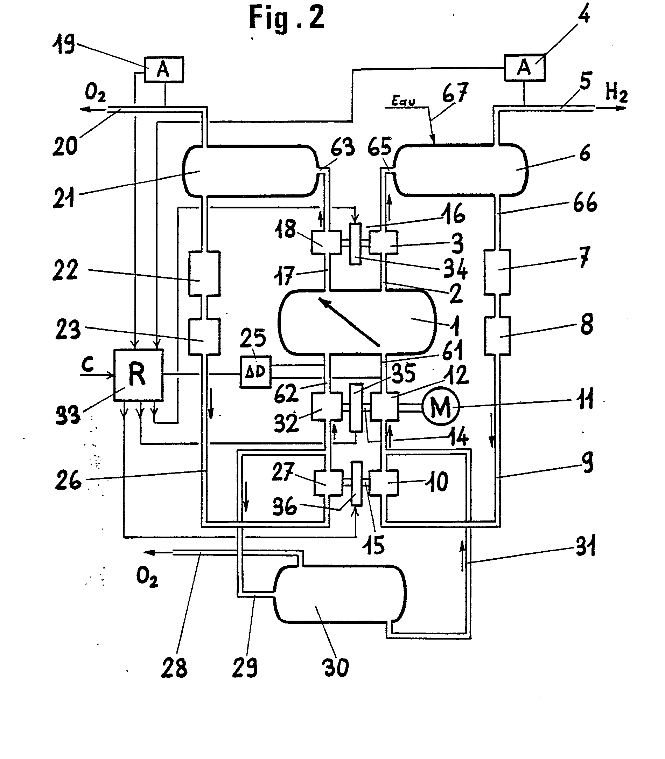

La figure 2 schématise une installation du type tel que décrit précédemment en référence à la figure 1, mais présentant quelques perfectionnements moyennant une plus grande complexité.

L'installation de la figure 2 se distingue de la précédente en ce qu'elle comporte, sur les arbres d'accouplement (16, 15) des régulateurs à engrenages (18, 3) et (27, 10), ainsi que sur l'arbre d'accouplement (14) des pompes de circulation (32, 12), des variateurs de vitesse (34, 35, 36) avantageusement commandés pneumatiquement à distance à partir d'un régulateur 33, en fonction d'une ou plusieurs valeurs de consigne C correspondant à une ou plusieurs conditions souhaitées pour les densités d'électrolyte et éventuellement, comme c'est le cas ici, pour la pureté des gaz extraits. Le régulateur 33 compare donc les valeurs de consigne C aux signaux d'entrée provenant d'un densimètre différentiel 25 placé entre les circuits d'entrée 61 et 62 de catholyte et d'anolyte dans l'électrolyseur 1, d'un analyseur de gaz 19 placé sur le circuit de sortie d'oxygène 20, et d'un analyseur de gaz 4 placé sur le circuit de sortie d'hydrogène 5. De manière classique, le régulateur 33 fournit aux variateurs 34, 35 et 36 des signaux permettant de faire varier les rapports de débits dans les régulateurs et pompes correspondants de manière à ce que les informations en provenance des éléments de contrôle (4, 19, 25) correspondent aux valeurs de consigne C.

On remarquera que l'installation de la figure 1 peut être également, dans un but de contrôle de bon fonctionnement, équipée d'analyseurs de gaz, tels que 4 et 19, et d'un densimètre différentiel tel que 25, le régulateur 33 étant remplacé par un simple appareil d'alarme à seuil, déclenchant en cas d'anomalie provoquée par exemple par des fissures de diaphragme.

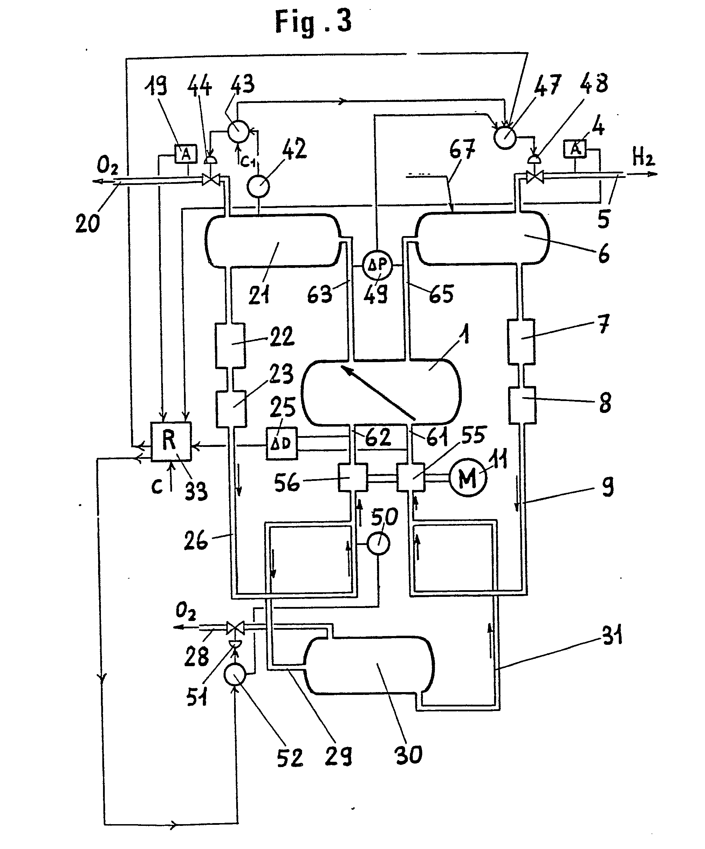

Les moyens permettant d'effectuer le transfert partiel à travers les diaphragmes, conformément à l'invention, peuvent être très variés, et on en donnera maintenant un autre exemple en référence à la figure 3, où ces moyens sont basés sur des différences de pressions au lieu d'être basés comme précécemment sur des différences de débits.

Comme on le voit sur le dessin, l'installation de la figure 3 présente de grandes analogies avec celle de la figure 2, et les éléments ayant dans les deux installations des fonctions identiques y ont été désignés par les mêmes chiffres de référence. L'installation de la figure 3 ne comporte pas de dispositifs de régulation de débit, de sorte que le transfert de l'électrolyte ainsi que la compensation de celui-ci par le circuit de réinjection (29, 30, 31) est obtenu en jouant sur les pressions des deux circuits anodique et cathodique.

Dans ce but, la pression d'oxygène dans le séparateur anodique 21 est maintenue constante par une boucle classique de régulation en pression comportant un régulateur 43 agissant sur une vanne 44, placée sur la sortie d'oxygène 20, en fonction des signaux transmis par un transmetteur de pression 42, relié au dégazeur 21 et une consigne C1. Par ailleurs, la pression d'hydrogène dans le séparateur cathodique 6 est maintenue, par l'intermédiaire d'un régulateur 47 agissant sur une vanne 48, à une valeur supérieure à celle de la pression précédente du circuit anodique, et fixée par la consigne C du régulateur 33 de façon à permettre, par différence de pressions, le transfert de l'électrolyte à travers les diaphragmes de l'électrolyseur 1 qui permet d'obtenir une différence de densité en potasse n'excédant pas 20% environ entre les deux circuits anodiques et cathodiques. Sur le régulateur 47 agissent également d'une part un signal en provenance du régulateur 43 permettant d'assurer un bon suivi de la pression d'hydrogène en fonction de la pression d'oxygène, ainsi que d'autre part un signal en provenance d'un transmetteur de pression différentiel 49 placé entre les conduites 63 et 65 et servant d'appareil de contrôle de la différence de pression obtenue réellement par rapport à celle fixée par l'intermédiaire de la consigne C. Enfin, comme dans le cas de l'installation de la figure 2, le régulateur 33 reçoit également des signaux en provenance du densimètre différentiel 25 et des analyseurs de gaz 4 et 19.

Dans l'installation de la figure 3, la dérivation de compensation de perte de débit (29, 20, 31) est également actionnée par des moyens de pression. Pour ceci, le séparateur 30 a sa pression fixée par l'intermédiaire d'une vanne 51 placée sur son circuit de sortie d'oxygène 28, et commandée par un régulateur 52 recevant d'une part un signal en provenance d'un capteur de pression 50 placé sur le circuit de retour anodique 26 en amont de la dérivation 29, et d'autre part un signal en provenance du régulateur général 33. Sous commande des régulateurs 52 et 33, on fixe ainsi sur le séparateur 30 une pression déterminée de façon à dériver du circuit 26 vers le circuit 9 le débit compensatoire désiré, comme dans le cas de l'installation de la figure 2.

L'invention trouve son utilisation principale pour la production d'hydrogène et d'oxygène par électrolyse de l'eau sous pression.

**Revendications**

1. Installation d'électrolyse pour la production de gaz, du type comportant un électrolyseur (1) équipé de cellules d'électrolyse ayant chacune un compartiment cathodique et un compartiment anodique, séparés l'un de l'autre par un diaphragme perméable aux liquides et imperméable aux gaz, une entrée d'électrolyte à une des extrémités de chaque compartiment et une sortie d'électrolyte à l'autre dudit compartiment, l'insallation étant munie de moyens pour faire circuler l'électrolyte en parallèle dans chacun desdits compartiments, de moyens pour diriger l'anolyte en sorties des compartiments anodiques vers un premier dispositif de dégazage (21), de moyens pour diriger le catholyte en sortie des compartiments cathodiques vers un second dispositif de dégazage (6), de moyens (26) pour extraire l'anolyte dégazé du premier dispositif de dégazage et pour le réinjecter dans les compartiments anodiques par leurs entrées, et de moyens (9) pour extraire le catholyte dégazé du second disposit de dégazage et le réinjecter dans les compartiments cathodiques par leurs entrées, caractérise en ce qu'elle est en outre munie de moyens basés sur la création de différences de débit, permettant d'effectuer, dans l'électrolyseur, un transfert partiel d'électrolyte à travers chaque diaphragme, de chaque compartiment cathodique vers le compartiment anodique correspondant, le pourcentage de catholyte ainsi transféré étant égal à celui nécessaire pour conserver des densités voisines pour l'anolyte et le catholyte malgré la réaction d'électrolyse, et en ce qu'elle comporte par ailleurs un dispositif (29, 30, 31) permettant de réinjecter, le même pourcentage d'électrolyte du circuit de retour d'anolyte dégazé vers le circuit de retour de catholyte dégazé.

2. Installation d'électrolyse selon la revendication 1, caractérisée en ce qu'elle comporte, en aval de l'électrolyseur (1), un dispositif (18) de commande de débit d'anolyte, accouplé à un dispositif (3) de commande de débit de catholyte, lesdits dispositifs étant dimensionnés pour imposer un rapport de débit anolyte-catholyte supérieur à celui existant aux entrées (61, 62) de l'électrolyseur de la quantité nécessaire pour effectuer, par aspiration, ledit transfert à travers lesdits diaphragmes.

3. Installation d'électrolyse selon la revendication 2, caractérisée en ce qu'elle comporte, en amont des conduites (29, 31) de réinjection d'anolyte dégazé vers le circuit de retour de catholyte dégazé, des dispositifs accouplés (27, 10, 15) de commande de débit sensiblement identiques aux dispositifs de commande de débit (18, 3, 16) placés en aval de l'électrolyseur.

4. Installation d'électrolyse selon la revendication 2 ou la revendication 3, caractérisée en ce qu'au moins un desdits ensembles de commande de débit (18, 3—27, 10) et/ou les pompes (32, 12) de circulation d'électrolyte, sont accouplés chacun par l'intermédiaire d'un variateur de vitesse (34, 35, 36).

5. Installation d'électrolyse selon la revendication 4, caractérisée en ce que le ou lesdits variateurs de vitesse sont commandés à distance à partir d'un circuit régulateur (33).

6. Installation d'électrolyse pour la production de gaz, du type comportant un électrolyseur (1) équipé de cellules d'électrolyse ayant chacune un compartiment cathodique et un compartiment anodique, séparés l'un de l'autre par un diaphragme perméable aux liquides et imperméable aux gaz, une entrée d'électrolyte à un des extrémités de chaque compartiment et une sortie d'électrolyte à l'autre extrémité dudit compartiment, l'installation étant munie de moyens pour faire circuler l'électrolyte en parallèle dans chacun desdits compartiments, de moyens pour diriger l'anolyte en sortie des compartiments anodiques vers un premier dispositif de dégazage (21), de moyens pour diriger le catholyte en sortie des compartiments cathodiques vers un second dispositif de dégazage (6), de moyens pour extraire l'anolyte dégazé du premier dispositif de dégazage et pour le réinjecter dans les compartiments anodiques par leurs entrées, et de moyens pour extraire le catholyte dégazé du second dispositif de dégazage et le réinjecter dans les compartiments cathodiques par leurs entrées, caractérisée en ce qu'elle est en outre munie de moyens basés sur la création d'une différence de pression entre le second dispositif de dégazage (6) et le premier dispositif de dégazage (21), permettant d'effectuer dans l'électrolyseur, un transfert partiel d'électrolyte à travers chaque diaphragme, de chaque compartiment cathodique vers le compartiment anodique correspondant, le pourcentage de catholyte ainsi transféré étant égal à celui nécessaire pour conserver des densités voisines pour l'anolyte et le catholyte malgré la réaction d'électrolyse, et en ce qu'elle comporte par ailleurs un dispositif (29, 30, 31) permettant de réinjecter le même pourcentage d'électrolyte, du circuit de retour d'anolyte dégazé vers le circuit de retour de catholyte dégazé.

7. Installation d'électrolyse selon la revendication 6, caractérisé en ce que lesdits moyens sont réalisés à l'aide de vannes (44, 48, 51) placées sur les sorties de gaz et commandées par l'intermédiaire de régulateurs (43, 47, 52).

**Patentansprüche**

1. Elektrolyseanlage für die Erzeugung von Gas, die ein Elektrolysegerät (1) aufweist, das mit Elektrolysezellen versehen ist, von welchen jede eine kathodische Kammer und eine anodische Kammer aufweist, die voneinander durch eine Membran getrennt sind, die durchlässig für Flüssigkeiten und undurchlässig für Gase ist, wobei jede der Kammern an einem Ende einen Elektrolyteinlaß und am anderen Ende einen Elektrolytauslaß besitzt und die Anlage mit Einrichtungen versehen ist, um den Elektrolyten in jeder der Kammern parallel zirkulieren zu lassen, eine Einrichtung zum Leiten des aus den anodischen Kammern austretenden Anolyten zu einer ersten Entgasungsvorrichtung (21) aufweist, eine Einrichtung zum Leiten des aus den kathodischen Kammern austretenden Katholyten zu einer zweiten Entgasungsvorrichtung (6) aufweist, eine Einrichtung (26) zur Entnahme des entgasten Anolyten aus der ersten Entgasungsvorrichtung und zum Wiedereinbringen des Anolyten in die anodischen Kammern durch deren Einlässe aufweist und eine Einrichtung (9) zur Entnahme des entgasten Katholyten aus der zweiten Entgasungsvorrichtung und zum Wiedereinbringen des Katholyten in die kathodischen Kammern durch deren Einlässe, aufweist, dadurch gekennzeichnet, daß die Anlage weiters mit Einrichtungen versehen ist, die auf der Schaffung von Unterschieden in der abgegebenen Menge basieren und damit im Elektrolysegerät eine teilweise Übertragung von Elektrolyt durch jede der Membranen aus jeder kathodischen Kammer zur entsprechenden anodischen Kammer zulassen, wobei der Prozentsatz an so übertragenem Katholyt gleich ist jenem, der erforderlich ist, um trotz der Elektrolysereaktion ähnliche Dichten für den Anolyten und Katholyten aufrechtzuerhalten, und daß die Anlage weiters eine Vorrichtung (29, 30, 31) besitzt, welche zuläßt, daß der gleiche Prozentsatz an Elektrolyt aus dem Rückführungskreis des entgasten Anolyten dem Rückführungskreis des entgasten Katholyten zugeführt wird.

2. Elektrolyseanlage nach Anspruch 1, dadurch gekennzeichnet, daß sie stromabwärts vom Elektrolysegerät (1) mit einer Anolytmengenregelungseinrichtung (18) versehen ist, die mit einer Katholytmengenregelungseinrichtung (3) gekoppelt ist, wobei die Abmessungen der Einrichtungen so gewählt sind, daß ein Mengenverhältnis zwischen Anolyt und Katholyt hergestellt wird, das größer als das an den Einlässen (61, 62) des Elektrolysegerätes herrschende ist, in dem Ausmaß, das erforderlich ist, um durch Ansaugen die Übertragung durch die verschiedenen Membranen zu bewirken.

3. Elektrolyseanlage nach Anspruch 2, dadurch gekennzeichnet, daß sie stromaufwärts von den Leitungen (29, 31) zum Wiedereinbringen des entgasten Anolyten in den Rückführungskreis des entgasten Katholyten gekoppelte Mengenregelungseinrichtungen (27, 10, 15) aufweist, die annähernd identisch mit den Mengenregelungseinrichtungen (18, 3, 16) sind, die stromabwärts vom Elektrolysegerät angeordnet sind.

4. Elektrolyseanlage nach Anspruch 2 oder 3, dadurch gekennzeichnet, daß wenigstens eine der Mengenregelungsanordnungen (18, 3—27, 10) und/oder die Pumpen (32, 12) für das Umwälzen des Elektrolyten jeweils unter Zwischenschaltung eines Geschwindigkeitsreglers (34, 35, 36) gekoppelt sind.

5. Elektrolyseanlage nach Anspruch 4, dadurch gekennzeichnet, daß der (die) Geschwindigkeitsregler durch einen Regelkreis (33) ferngesteuert ist (sind).

6. Elektrolyseanlage für die Erzeugung von Gas, die ein Elektrolysegerät (1) aufweist, das mit Elektrolysezellen versehen ist, von welchen jede eine kathodische Kammer und eine anodische Kammer aufweist, die voneinander durch eine Membran getrennt sind, die durchlässig für Flüssigkeiten und undurchlässig für Gase ist, wobei jede der Kammern an einem Ende einen Elektrolyteinlaß und am anderen Ende einen Elektrolytauslaß besitzt und die Anlage mit Einrichtungen versehen ist, um den Elektrolyten in jeder der Kammern parallel zirkulieren zu lassen, eine Einrichtung zum Leiten des aus den anodischen Kammern austretenden Anolyten zu einer ersten Entgasungsvorrichtung (21) aufweist, eine Einrichtung zum Leiten des aus den kathodischen Kammern austretenden Katholyten zu einer zweiten Entgasungsvorrichtung (6) aufweist, eine Einrichtung zur Entnahme des entgasten Anolyten aus der ersten Entgasungsvorrichtung und zum Wiedereinbringen des Anolyten in die anodischen Kammern durch deren Einlässe aufweist und eine Einrichtung zur Entnahme des entgasten Katholyten aus der zweiten Entgasungsvorrichtung und zum Wiedereinbringen des Katholyten in die kathodischen Kammern durch deren Einlässe, aufweist, dadurch gekennzeichnet, daß die Anlage weiters mit Einrichtungen versehen ist, die auf der Schaffung von Druckunterschieden zwischen der zweiten Entgasungsvorrichtung (6) und der ersten Entgasungsvorrichtung (21) basieren und damit im Elektrolysegerät eine teilweise Übertragung von Elektrolyt durch jede der Membranen aus jeder der kathodischen Kammern zur entsprechenden anodischen Kammer zulassen, wobei der Prozentsatz an so übertragenem Katholyt gleich ist jenem, der erforderlich ist, um trotz der Elektrolysereaktion ähnliche Dichten für den Anolyten und Katholyten zu erhalten, und daß die Anlage weiters eine Vorrichtung (29, 30, 31) besitzt, welche zuläßt, daß der gleiche Prozentsatz an Elektrolyt aus dem Rückführungskreis des entgasten Anolyten dem Rückführungskreis des entgasten Katholyten zugeführt wird.

7. Elektrollyseanlage nach Anspruch 6, dadurch gekennzeichnet, daß die genannten Einrichtungen aus Klappen bzw. Schiebern (44, 48, 51) bestehen, die an den Gasauslässen angeordnet sind und unter Zwischenschaltung von Reglern (43, 47, 52) betätigt werden.

**Claims**

1. An electrolysis unit for the production of gas, of the type comprising an electrolyser (1) equipped with electrolysis cells each having a cathode compartment and an anode compartment, separated from each other by a diaphragm which is permeable to liquids and impermeable to gases, an electrolyte inlet at one of the ends of each compartment and an electrolyte outlet at the other end of the said compartment, the unit being provided with means for circulating the electrolyte in parallel in each of the said compartments, means for directing the anolyte leaving the anode compartments to a first device for degassing (21), means for directing the catholyte leaving the cathode compartments to a second device for degassing (6), means (26) for withdrawing the degassed anolyte from the first device for degassing and for reinjecting it into the anode compartments through their inlets, and means (9) for withdrawing the degassed catholyte from the second device for degassing and reinjecting it into the cathode compartments through their inlets, characterised in that it is additionally provided with means based on producing flow differences, making it possible to obtain, in the electrolyser, a partial transfer of electrolyte across each diaphragm, from each cathode compartment towards the corresponding anode compartment, the percentage of catholyte thus transferred being equal to that needed to maintain the densities of the anolyte and the catholyte close together, despite the electrolysis reaction, and in that it further comprises a device (29, 30, 31) permitting the same percentage of electrolyte from the circuit for recycling degassed anolyte to be reinjected towards the circuit for recycling degassed catholyte.

2. An electrolysis unit according to Claim 1, characterised in that it comprises, downstream of the electrolyser (1), a device (18) for controlling the flow of anolyte, coupled to a device (3) for controlling the flow of catholyte, the said devices being sized to impose an anolyte-catholyte flow ratio which is greater than that at the inlet (61, 62) of the electrolyser by the quantity required to produce, by suction, the said transfer across the said diaphragms.

3. An electrolysis unit according to Claim 2, characterised in that it comprises, upstream of the conduits (29, 31) for reinjecting degassed anolyte towards the circuit for recycling degassed catholyte, coupled devices (27, 10, 15) for controlling upflow which are substantially identical to the devices for controlling flow (18, 3, 16) placed downstream of the electrolyser.

4. An electrolysis unit according to Claim 2 or Claim 3, characterised in that at least one of the said systems for controlling flow (18, 3—27, 10) and/or the pumps (32, 12) for circulating electrolyte, are each coupled by means of a speed regulator (34, 35, 36).

5. An electrolysis unit according to Claim 4, characterised in that the said speed regulator or regulators are controlled remotely from a regulating circuit (33).

6. An electrolysis unit for the production of gas, of the type comprising an electrolyser (1) equipped with electrolysis cells each having a cathode compartment and an anode compartment, separated from each other by a diaphragm which is permeable to liquids and impermeable to gases, an electrolyte inlet at one of the ends of each compartment and an electrolyte outlet at the other end of the said compartment, the unit being provided with means for circulating the electrolyte in parallel in each of the said compartments, means for directing the anolyte leaving the anode compartments towards a first degassing device (21), means for directing the catholyte leaving the cathode compartments towards a second degassing device (6), means for withdrawing the degassed anolyte from the first degassing device and for reinjecting it into the anode compartments through their inlets, and means for withdrawing the degassed catholyte from the second degassing device and reinjecting it into the cathode compartments through their inlets, characterised in that, in addition, it is equipped with means based on producing a pressure difference between the second degassing device (6) and the first degassing device (21), permitting the production in the electrolyser of a partial transfer of electrolyte across each diaphragm, from each cathode compartment towards the corresponding anode compartment, the percentage of catholyte thus transferred being equal to that required to maintain the densities of the anolyte and the catholyte close together, despite the electrolysis reaction, and that in addition it comprises a device (29, 30, 31) permitting the same percentage of electrolyte to be reinjected from the circuit for recycling degassed anolyte towards the circuit for recycling degassed catholyte.

7. An electrolysis unit according to Claim 6, characterised in that the said means are produced with the aid of valves (44, 48, 51) placed in the gas outlets and controlled by means of regulators (43, 47, 52).

# Fig.1

**0 023 168**

**Fig . 2**

# Fig .3